# EUROPÄISCHE PATENTSCHRIFT

(11) **EP 3 786 010 B1**
(45) Veröffentlichungstag und Bekanntmachung des Hinweises auf die Patenterteilung: **07.06.2023**
(21) Anmeldenummer: 20187546.5
(22) Anmeldetag: 23.07.2020
(51) Int. Cl.: B60D 1/36, B60D 1/62, G06V 20/58, B60T 7/22, B60D 1/06

(54) **KOLLISIONSVERMEIDUNG BEI ANNÄHERUNG EINES FAHRZEUGS AN EINE ANHÄNGERDEICHSEL**
COLLISION AVOIDANCE WHEN A VEHICLE APPROACHES A TOW BAR
ÉVITEMENT DE COLLISION LORS DU RAPPROCHEMENT D'UN VÉHICULE À UN TIMON D'ATTELAGE

(30) Priorität: 02.09.2019 DE 102019213223
(43) Veröffentlichungstag der Anmeldung: 03.03.2021
(73) Patentinhaber: VOLKSWAGEN AG, 38440 Wolfsburg (DE)
(72) Erfinder: Schwitters, Frank, 38154 Königslutter (DE); Ziebart, Sascha, 38547 Calberlah (Wettmershagen) (DE)

(56) Entgegenhaltungen:
- WO-A1-2008/009519
- DE-A1- 10 302 545
- DE-A1-102010 006 762
- DE-A1-102014 114 078
- DE-A1-102017 220 459

## Beschreibung

### TECHNSICHES GEBIET

Die vorliegende Erfindung betrifft Techniken zur Kollisionsvermeidung bei Annäherung eines Fahrzeugs an eine Anhängerdeichsel. Die Techniken ermöglichen insbesondere ein automatisches Abbremsen des Fahrzeugs, wenn eine Anhängerdeichsel in einem vorgegebenen Abstand zum Fahrzeug erkannt wird. Um den Abstand der Anhängerdeichsel zum Fahrzeug zu bestimmen, werden Bilddaten einer Kamera mittels eines Bildverarbeitungsalgorithmus ausgewertet.

### HINTERGRUND DER ERFINDUNG

Parkhilfesysteme für Fahrzeuge, insbesondere Personenkraftfahrzeuge oder Lastkraftwagen, erleichtern das Einparken und vermeiden eine Kollision des Fahrzeugs mit umliegenden Gegenständen. Manchmal erfolgt das Einparken rückwärts. Das erschwert das Einparken zusätzlich.

Es wurde beobachtet, dass es besonders beim rückwärtigen Heranfahren an eine Anhängerdeichsel leicht zu Kollisionen mit dieser kommt, da die Anhängerdeichsel aufgrund ihrer Geometrie schwer vom Fahrer oder von Parkhilfesystemen erkannt werden kann. Beispielsweise ist ein Ultraschall-Reflektionsquerschnitt von Anhängerdeichseln für Ultraschall-basierte Parkhilfesysteme besonders gering. Dies kann insbesondere ein Problem bei Ankuppelvorgängen darstellen.

Im Detail verwenden derzeit auf dem Markt befindliche Systeme Ultraschallsensoren oder Kameras. Viele bisherige Systeme können geometrisch ungünstige Hindernisse (wie z.B. Anhängerdeichseln) nicht oder nicht rechtzeitig erkennen. Der Fahrer ist häufig auf zusätzliche Information durch eine Einweiserperson angewiesen. Selbst wenn ein System oder eine Einweiserperson das Hindernis rechtzeitig erkennt, muss der Fahrer die durch die Kamera oder die Einweiserperson erhaltene Information interpretieren und das Fahrzeug selbst zum Stehen bringen, um eine Kollision zu vermeiden.

Manche Assistenzsysteme mit Rückfahrkamera haben die Möglichkeit, sich im Rückfahrkamerabild Hilfslinien anzeigen zu lassen, die es dem Fahrer ermöglichen, bei einem Ankuppelvorgang den Abstand zur Anhängerdeichsel abzuschätzen und sich entsprechend zu nähern. Es obliegt aber immer noch dem Fahrer, das Rückfahrkamerabild selbst zu interpretieren und selbstständig rechtzeitig zu bremsen.

Zusätzlich gibt es Assistenzsysteme, die ein Fahrzeug autonom z.B. an eine Anhängerdeichsel heranführen und das Fahrzeug gegebenenfalls abbremsen. Verwendet der Fahrer solche Assistenzsysteme nicht, kann das Fahrzeug nicht automatisch zum Stillstand gebracht werden und so besteht die Gefahr einer Kollision.

In diesem Zusammenhang offenbart die DE 103 02 545 A1 ein Unterstützungssystem für Andockvorgänge von Fahrzeugen. Zur Unterstützung des Fahrers bei Andockmanövern können dem Fahrer Angaben wie z.B. Lenkeinschlag, Geschwindigkeit und Abstand zur Anhängerkupplung vorgegeben werden. Zudem kann das Andockmanöver von dem Fahrzeug autonom durchgeführt werden. Dazu wird ein Regelalgorithmus implementiert, der alle relevanten Größen wie beispielsweise die Lenkung, das Gas und die Bremsen berücksichtigt. Ferner wird über einen Objektalgorithmus beispielsweise die Kupplung des Anhängers detektiert. Ein solches System weist den Nachteil auf, dass bei ausgeschaltetem Fahrerassistenzsystem eine Kollision stattfinden kann.

Die DE 10 2009 030 452 A1 betrifft ein Verfahren zum Betrieb eines Fahrerassistenzsystems eines Fahrzeugs, wobei mittels Sensoreinheiten ein unmittelbar hinter dem Fahrzeug liegender Umgebungsbereich überwacht wird. Das Fahrerassistenzsystem weist zumindest eine Rückfahrkamera und/oder einen oder mehrere Ultraschallsensoren auf, die mit einer Steuereinheit verbunden sind und eine Sensoreinheit bilden. Die Sensoreinheiten senden Sendesignale in Form von Ultraschallimpulsen aus und eine Auswerteeinheit misst die Laufzeit zwischen Aussenden des Sendesignals und Eintreffen des reflektierten Sendesignals. Unterschreitet die Laufzeit des Sendesignals einen Direktecho-Schwellwert wird eine Warnmeldung an den Fahrzeugführer ausgegeben. Die Rückfahrkamera dient insbesondere dazu, den Fahrer bei einer Rückwärtsfahrt zu unterstützen. Wird beispielweise ein Objekt in Form einer Anhängervorrichtung erfasst, kann der Rückfahrkamera ein Signal zugeführt werden, um den Detektionsbereich optisch heranzuzoomen. Darüber hinaus kann bei kritischen Situationen hinsichtlich eines Abstandes des Fahrzeugs zu einem Objekt, steuernd und/oder regelnd in beispielsweise Lenk- und/oder Bremsfunktionen des Fahrzeugs eingegriffen werden. Ein solches System weist den Nachteil auf, dass bestimmte Hindernisse (z.B. Anhängerkupplungen) nicht oder nicht gut erkannt werden.

Die DE 10 2012 001 380 A1 betrifft ein Assistenzverfahren für ein Ankuppelmanöver eines Kraftfahrzeugs mit Anhängerkupplung an eine Anhänger-Kupplungspfanne mittels eines Fahrerassistenzsystems. Dabei wird ein Bild mit einer Rückfahrkamera aufgenommen, in deren Erfassungsbereich zumindest eine Kupplungspfanne liegt. Ferner wird der Lenkeinschlag des Lenkrads des Fahrzeugs durch einen Lenkwinkelsensor erfasst und daraus die Kupplungspfanne erkannt. Anschließend wird eine Trajektorie zwischen der Anhängerkupplung und der Kupplungspfanne berechnet. Das Fahrerassistenzsystem kann beim Manövrieren des Fahrzeugs entlang der Trajektorie Lenk-, Brems- und/oder Beschleunigungseingriffe ausführen oder das Fahrzeug automatisch entlang der Trajektorie manövrieren. Ein solches System weist den Nachteil auf, dass bei ausgeschaltetem Fahrerassistenzsystem eine Kollision stattfinden kann.

### KURZE ZUSAMMENFASSUNG DER ERFINDUNG

Es besteht also ein Bedarf an Techniken zur Kollisionsvermeidung, die eine automatische Bremsanforderung auslösen, wenn sich das Fahrzeug mit einer Geschwindigkeit einer Anhängerdeichsel nähert, die eine Kollision wahrscheinlich macht, insbesondere dann wenn das Andockmanöver des Fahrzeugs nicht autonom durchgeführt wird.

Aufgabe der vorliegenden Erfindung ist es, ein automatisches Abbremsen des Fahrzeugs bei Annäherung an eine Anhängerdeichsel zu ermöglichen.

Gemäß der vorliegenden Erfindung wird diese Aufgabe durch ein Verfahren zum automatischen Abbremsen eines Fahrzeugs bei Annäherung des Fahrzeugs an eine Anhängerdeichsel in einer Umgebung des Fahrzeugs nach Anspruch 1, eine Vorrichtung nach Anspruch 9 und ein Fahrzeug nach Anspruch 10 gelöst. Die abhängigen Ansprüche definieren bevorzugte und vorteilhafte Ausführungsformen der vorliegenden Erfindung.

Gemäß der vorliegenden Erfindung liegt ein Verfahren zum automatischen Abbremsen eines Fahrzeugs bei Annäherung des Fahrzeugs an eine Anhängerdeichsel in einer Umgebung des Fahrzeugs vor. Bei dem Verfahren werden Bilddaten einer Kamera empfangen. Die Bilddaten werden mittels eines Bildverarbeitungsalgorithmus analysiert und eine Notbremsassistenzfunktionalität des Fahrzeugs wird ausgelöst, wenn durch die Analyse der Bilddaten eine Anhängerdeichsel in einem vorgegebenen Abstand zur Anhängerkupplung des Fahrzeugs erkannt wird.

Im Rahmen der Notbremsassistenzfunktionalität kann die Geschwindigkeit des Fahrzeugs reduziert werden oder das Fahrzeug kann bis zum Stillstand abgebremst werden. Dadurch kann eine Kollision des Fahrzeugs mit der Anhängerdeichsel vermieden werden.

Vorteil einer solchen Technik, bei der die Notbremsassistenzfunktionalität mit Hilfe von Bilddaten ausgelöst wird, ist, dass verschiedene Arten von Hindernisse wie eine Anhängerdeichsel besonders gut erkannt werden können. Dies gilt insbesondere auch für solche Hindernisse, die einen geringen Reflektionsquerschnitt für Ultraschallwellen aufweisen. Bei Detektion von geometrisch ungünstigen Hindernissen mit Ultraschallwellen reicht die Energie der schwach reflektierten Ultraschallwelle meist nicht aus, um das Hindernis rechtzeitig wahrnehmen zu können.

Voranstehend wurden Techniken im Zusammenhang mit der Erkennung einer Anhängerdeichsel beschrieben. Als allgemeine Regel können die hierin beschriebenen Techniken nicht nur im Zusammenhang mit Anhängerdeichseln Anwendung finden, sondern bei verschiedensten Typen von Hindernissen. Beispiele für ansonsten schwer erkennbare Gegenstände im Straßenverkehr sind Poller, dünne Planken, Absperrungen etc.

Beispielsweise könnte die Notbremsassistenzfunktionalität durch ein Software-Modul auf einem Steuergerät des Fahrzeugs implementiert werden. Unterschiedliche Assistenzfunktionalitäten könnten durch unterschiedliche Software-Module implementiert werden.

Gemäß einer Ausführungsform wird der vorgegebene Abstand zum Fahrzeug aus der Geschwindigkeit des Fahrzeugs und einem vorgegebenen Verzögerungswert berechnet. Derart kann die Kollision effizient vermieden werden.

Der vorgegebene Abstand kann als Schwellwert dienen. Wird der Schwellwert unterschritten, kann eine bestimmte Aktion ausgelöst werden, hier das automatische Bremsen.

Die Berechnung des vorgegebenen Abstandes kann zyklisch mit einer Wiederholrate erfolgen, die beispielsweise nicht kleiner als 10 Hz ist. Da sich das Fahrzeug auf einen Gegenstand zubewegt, ändert sich fortlaufend der Abstand zwischen Fahrzeug und Gegenstand. Der aktuelle Abstand wird fortlaufend aus den Bilddaten der Kamera ermittelt. Durch einen wiederholten Vergleich des aktuellen Abstandes mit dem vorgegebenen Abstandes, der in hinreichend kurzen Zeitabständen wiederholt wird, kann der Zeitpunkt zum automatischen Abbremsen ausreichend genau bestimmt werden, um eine Kollision zu vermeiden; jedoch unter Vermeidung eines übermäßig frühen Eingriffs in den Fahrer-Fahrtwunsch.

Gemäß einer weiteren Ausführungsform wird die Notbremsassistenzfunktionalität des Fahrzeugs einen vom Fahrer durch Betätigung der Pedalerie des Fahrzeugs definierten Fahrtwunsch übersteuert. Der Fahrer-Fahrtwunsch kann also durch die Notbremsassistenzfunktionalität außer Kraft gesetzt werden. Dadurch kann verhindert werden, dass das Fahrzeug mit einer Anhängerdeichsel kollidiert.

Ferner können dem Fahrer im Zusammenhang mit dem Auslösen der Notbremsassistenzfunktionalität zusätzlich eine akustische, optische und/oder haptische Warnung übermittelt werden. Das bedeutet, dass z.B. kurz vor Auslösen der Notbremsassistenzfunktionalität oder mit Auslösen der Notbremsassistenzfunktionalität die Warnung übermittelt werden kann. Durch eine Warnung vor dem oder während dem automatischen Abbremsen wird der Fahrer auf den anschließenden Bremsvorgang vorbereitet. Dadurch verringert sich das Verletzungsrisiko des Fahrers.

Dabei wird beispielsweise die Ortsinformation der über die Anhängerkupplungsassistenzfunktion gefundenen Anhängerdeichsel in eine Warnung codiert. Je nach Abstand, kann die Warnung weniger intensiv oder intensiver erfolgen.

Die Warnung kann in akustischer, optischer oder haptischer Weise erfolgen. Beispielsweise kann die Warnung durch eine Anzeige (Hervorhebung oder Markierung) in einem Rückfahrkamerabild erfolgen. Alternativ kann ein Signal ertönen oder eine Vibration auf den Fahrer übertragen werden.

Gemäß einer weiteren Ausführungsform wird der Fahrer über den Grund der Auslösung der Notbremsassistenzfunktionalität - d.h. der erkannten Anhängerkupplung - informiert. Der Grund der Bremsung kann beispielsweise auf einem Bildschirm erscheinen, etwa eine Anhängerkupplung in Piktogramm-Form. Vorteil ist, dass der Fahrer unmittelbar nach der Bremsung den Grund der Bremsung erfährt und die Situation richtig einordnen kann.

Mit Unabhängigkeit von der vorliegenden Erfindung wäre es möglich, dass der Bildverarbeitungsalgorithmus auch von einer Anhängerankupplungsassistenzfunktionalität des Fahrzeugs zur automatischen Heranführung des Fahrzeugs an die Anhängerdeichsel verwendet wird. Das bedeutet, dass beispielsweise mehrere Software-Module auf den Bildverarbeitungsalgorithmus zugreifen können, nämlich einmal das Software-Modul, das die Notbremsassistenzfunktionalität implementiert, sowie auch ein weiteres Software-Modul, das die Anhängerkupplungsfunktionalität implementiert.

Anhand der Anhängerankupplungsassistenzfunktionalität kann das Fahrzeug autonom an das die Anhängerdeichsel herangeführt werden und das Fahrzeug automatisch gebremst werden, wenn durch die Analyse der Bilddaten eine Anhängerdeichsel in einem vorgegebenen Abstand zur Anhängerkupplung des Fahrzeugs erkannt wird. Z.B. kann die Heranführung des Fahrzeugs entlang einer Trajektorie erfolgen, die anhand der Bilddaten bestimmt wird.

Indem sowohl die Anhängerankupplungsassistenzfunktionalität, wie auch die Notbremsassistenzfunktionalität auf denselben Bildverarbeitungsalgorithmus zurückgreifen, kann eine Ressourcen-effiziente Implementierung ermöglicht werden. Dabei ist es möglich, dass die Notbremsassistenzfunktionalität ausgelöst wird, auch wenn die Anhängerkupplungsassistenzfunktionalität deaktiviert ist. In diesem Fall kann das Fahrzeug auch bei ausgeschaltetem Anhängerankupplungsassistenten automatisch abgebremst werden. Obwohl das Fahrzeug von dem Fahrer gesteuert wird, kann durch das Verfahren eine Kollision vermieden werden.

Die vorliegende Erfindung stellt ferner eine Vorrichtung bereit, welche einen Prozessor und einen Speicher umfasst. Der ist Prozessor eingerichtet, um Programmcode aus dem Speicher zu laden und auszuführen, wobei das Ausführen des Programmcodes bewirkt, dass der Prozessor Bilddaten von einer Kamera empfängt und die Bilddaten mittels eines Bildverarbeitungsalgorithmus analysiert. Das Ausführen des Programmcodes bewirkt ferner, dass der Prozessor eine Notbremsassistenzfunktionalität des Fahrzeugs auslöst, wenn durch die Analyse der Bilddaten eine Anhängerdeichsel in einem vorgegebenen Abstand zur Anhängerkupplung des Fahrzeugs erkannt wird.

Schließlich wird gemäß der vorliegenden Erfindung ein Fahrzeug bereitgestellt, welches eine Vorrichtung, wie sie zuvor beschrieben wurde, umfasst.

Die oben beschriebenen Beispiele und die nachfolgend beschriebenen Beispiele können miteinander und mit weiteren Beispielen kombiniert werden.

### KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden.
FIG. 1 zeigt schematisch eine Vorrichtung umfassend einen Prozessor, einen Speicher und eine Schnittstelle.
FIG. 2 zeigt ein Softwaremodul umfassend einen Anhängerkupplungsassistenten, einen Notbremsassistenten und einen Anhängerkuppelerkennungsassistenten.
FIG. 3 zeigt Verfahrensschritte eines Verfahrens gemäß einer Ausführungsform der vorliegenden Erfindung. Hierbei sind optionale Schritte mit einem gestrichelten Kasten umrandet.
FIG. 4 zeigt schematisch ein Fahrzeug gemäß einer Ausführungsform der vorliegenden Erfindung.

### DETAILLIERTE BESCHREIBUNG DER ERFINDUNG

Die Zeichnungen sind als schematische Darstellungen zu betrachten und die in den Zeichnungen dargestellten Elemente sind nicht unbedingt maßstabsgetreu dargestellt. Vielmehr werden die verschiedenen Elemente so dargestellt, dass ihre Funktion und allgemeine Bedeutung für einen Fachmann ersichtlich werden.

Nachfolgend werden Techniken zur Unterstützung des Fahrers eines Fahrzeugs beschrieben. Es werden insbesondere Assistenzfunktionalitäten beschrieben. Die Assistenzfunktionalitäten können den Fahrer dabei unterstützen, Kollisionen mit schwer erkennbaren Hindernissen zu vermeiden.

Nachfolgend werden die Techniken insbesondere anhand der Annäherung eines Fahrzeugs an ein Hindernis in Form einer Anhängerdeichsel beschrieben. Darüber hinaus können die Techniken aber allgemein zur Kollisionsvermeidung bei Annäherung eines Fahrzeugs an andere Gegenstände übertragen werden.

Die hierin beschriebenen Techniken beruhen auf einer Analyse von Bilddaten, z.B. 2-D Bilddaten von einem Kamerasensor. Es können aber ergänzend - etwa mittels Sensorfusion - auch andere Sensordaten verwendet werden.

Die hierin beschriebenen Techniken ermöglichen insbesondere eine synergetische Ausnutzung eines Bildverarbeitungsalgorithmus für mehrere Zwecke: nämlich einerseits für eine Notbremsassistenzfunktionalität, sowie andererseits für eine Anhängerankupplungsassistenzfunktionalität.

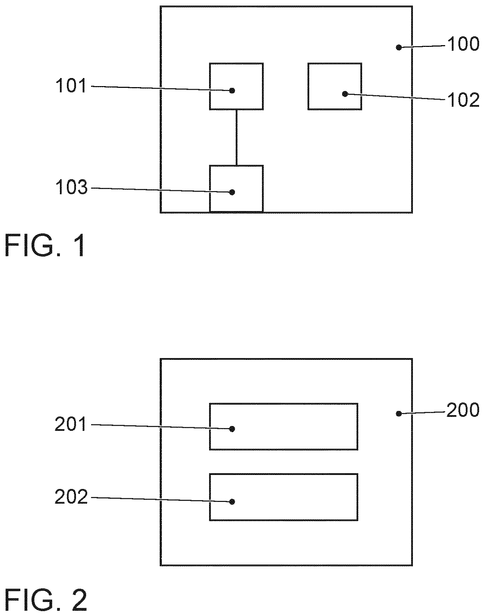

FIG. 1 zeigt eine schematische Darstellung einer Vorrichtung 100 mit einem Prozessor 101, einem Speicher 102 und einer Schnittstelle 103. Der Prozessor 101 ist eingerichtet, um Programmcode aus dem Speicher 102 zu laden und auszuführen. Das Ausführen des Programmcodes bewirkt, dass der Prozessor 101 Bilddaten einer Kamera (in FIG. 1 nicht dargestellt) über die Schnittstelle 103 empfängt und die Bilddaten mittels eines Bildverarbeitungsalgorithmus analysiert. Dem folgt das automatische Abbremsen des Fahrzeugs, wenn durch die Analyse der Bilddaten eine Anhängerdeichsel in einem vorgegebenen Abstand zur Anhängerkupplung des Fahrzeugs erkannt wird. Dazu können Steuerdaten, die das Auslösen einer Notbremsassistenzfunktionalität umsetzen, über die Schnittstelle 103 ausgegeben werden.

Beispielsweise könnte der Prozessor 101 mittels des Programmcodes verschiedene Software-Module ausführen. Ein entsprechendes Beispiel ist in FIG. 2 gezeigt.

FIG. 2 zeigt ein Software-Modul 200 für Assistenzfunktionalitäten. Das Software-Modul 200 umfasst mehrere Teilmodule, nämlich ein erstes Teilmodul 201, das eine Anhängerankupplungsassistenzfunktionalität implementiert; sowie ein zweites Teilmodul 202, welches eine Notbremsassistenzfunktionalität implementiert. Das Software-Modul 200 oder die Teilmodule 201, 202 können von dem Prozessor 101 aus dem Speicher 102 geladen und ausgeführt werden.

Die Aufgabe des Anhängerankupplungsassistenzfunktionalität des Teilmoduls 201 ist es ein Fahrzeug automatisch an eine Anhängerdeichsel heranzuführen, so dass z.B. dessen Kralle nach Absenken direkt auf der Anhängerkupplung platziert wird.

Die Aufgabe der Notbremsassistenzfunktionalität des Teilmoduls 202 ist es, das Fahrzeug 400 automatisch abzubremsen, um eine Kollision mit einem Hindernis, insbesondere einer Anhängerdeichsel zu vermeiden.

Die Teilmodule 201, 202 können beide auf gemeinsame Bibliotheken oder Funktionen zugreifen. Es wäre z.B. möglich, dass das Teilmodul 201, wie auch das Teilmodul 202 beide auf eine Bibliothek zugreifen, die einen Bildverarbeitungsalgorithmus bereitstellt. Der Bildverarbeitungsalgorithmus kann Bilddaten analysieren und in den Bilddaten eine Anhängerkupplung erkennen.

Optional kann das Teilmodul 202, also die Notbremsassistenzfunktionalität, bei deaktiviertem Teilmodul 201, also bei deaktivierter Anhängerankupplungsassistenzfunktionalität verwendet werden. Hier kann eine automatische Bremsanforderung ausgelöst werden, auch wenn sich das Fahrzeug ohne aktivierter Anhängerankupplungsassistenzfunktionalität der Anhängerdeichsel mit einer Geschwindigkeit nähert, die eine Kollision wahrscheinlich macht. Dies liegt daran, dass das Teilmodul 202 auch getrennt vom Teilmodul 201 auf den Bildverarbeitungsalgorithmus zugreifen kann.

Ferner könnte die Anhängerankupplungsassistenzfunktionalität auch bei deaktivierter Notbremsassistenzfunktionalität verwendet werden. Es ist auch denkbar, dass die Anhängerankupplungsassistenzfunktionalität und die Notbremsassistenzfunktionalität in Kombination verwendet werden.

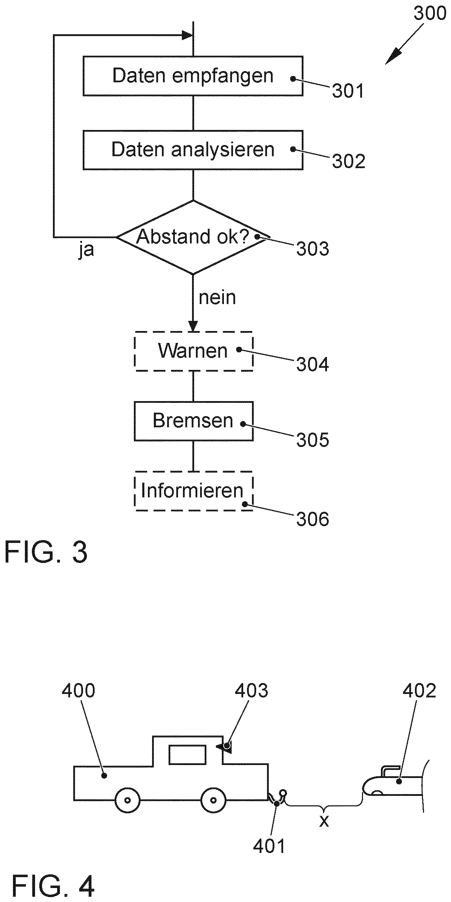

Nachfolgend wird die Funktionsweise der Notbremsassistenzfunktionalität anhand des Flussdiagramms der FIG. 3 näher beschrieben. FIG. 3 zeigt ein Verfahren 300 mit Verfahrensschritte 301 bis 306. Das Verfahren aus FIG. 3 könnte z.B. vom Prozessor 101 der Vorrichtung 100 ausgeführt werden (vgl. FIG. 1), etwa basierend auf Programmcode aus dem Speicher 102.

Im Schritt 301 werden Daten von Sensoren empfangen. Vorzugsweise handelt es sich um Bilddaten einer Kamera.

Im nächsten Schritt 302 werden die Bilddaten mittels eines Bildbearbeitungsalgorithmus analysiert. Der Bildbearbeitungsalgorithmus sucht in den Bilddaten eine Anhängerdeichsel, etwa anhand typischer Erscheinungsmerkmale der Anhängerkupplung. Es kann a-priori Wissen über die Erscheinungsform hinterlegt sein, etwa typische Größen, Gestängeanordnungen, usw. Eine Landmarkenerkennung wäre denkbar. Bei hinreichender Beleuchtung kann eine Anhängerdeichsel in einem Abstand von z.B. bis zu 3 Meter erkannt werden.

Neben der Objekterkennung kann aus den Bilddaten der Kamera auch der Ort der Anhängerdeichsel bestimmt werden, z.B. in einem Referenzkoordinatensystem das im Zusammenhang mit der Position der Kamera kalibriert ist. Daraus kann ein aktueller Abstand x zwischen der Anhängerkupplung (z.B. einem Referenzpunkt der Anhängerkupplung, dem nächstliegenden Punkt der Anhängerkupplung, etc.) des Fahrzeugs (der im Referenzkoordinatensystem definiert sein kann) und der Anhängerdeichsel ermittelt werden. Es könnte der kürzeste Abstand bestimmt werden.

Dann wird in Schritt 303 überprüft, ob der aktuelle Abstand x in einem akzeptablen Bereich liegt.

Dazu kann überprüft werden, ob der aktuell gemessene Abstand x einen erforderlichen, vorgegebenen Abstand unterschreitet. Der vorgegebene Abstand ist größer als der Anhalteweg, damit es nicht zur Kollision kommt. Der Anhalteweg des Fahrzeugs bestimmt sich beispielweise durch die Strecke n, innerhalb derer sich das Fahrzeug noch ungebremst linear weiterbewegt, da noch kein Bremsdruck erzeugt wird, und einer Strecke s, während der das Fahrzeug stark bis zum Stillstand verzögert wird. Die Strecke s, während der das Fahrzeug bis zum Stillstand verzögert wird, berechnet sich nach dem Zusammenhang s = 0,5*a*(t^2) und t = v/a, wobei a dem Verzögerungsvermögen, t der Zeit und v der Geschwindigkeit entsprechen. Zu einem bestimmten Zeitpunkt kann die Strecke s mit s = (v^2)/(2a) berechnet werden. Es folgt, dass es bei einem angenommenen Verzögerungsvermögen von beispielsweise 0,5m/(s^2) zu jeder Anfahrgeschwindigkeit einen vorgegebenen Abstand als Schwellenwert gibt, bei dem eine Verzögerung durch die Notbremsassistenzfunktionalität zur Kollisionsvermeidung ausgelöst werden sollte.

Oder in anderen Worten, allgemeiner formuliert: Auf Grundlage der aktuellen Geschwindigkeit des Fahrzeugs und der Kenntnis des Abstands bis zur Anhängerdeichsel wird die zum Anhalten erforderliche Verzögerung, um eine Kollision zu vermeiden, ermittelt. Wenn die aktuell erforderliche Verzögerung einen vorgegebenen, einstellbaren Wert (im oben genannten Beispiel 0,5m/(s^2)) überschreitet, wird eine automatische Bremsung in den Stillstand ausgelöst. Dann unterschreitet nämlich der gemessene Abstand den vorgegebenen Abstand bzw. Abstands-Schwellenwert.

Der Vergleich von aktuellem Abstand und vorgegebenem Abstand (Abstands-Schwellenwert) bzw. von aktuell erforderlicher Verzögerung und vorgegebener Verzögerung findet in Schritt 303 statt. Ist der aktuelle Abstand größer als der vorgegebene Abstand, beginnt das Verfahren wieder bei Schritt 301. Dadurch kann eine zyklische Berechnung des vorgegebenen Abstands erfolgen, z.B. mit einem Takt von 10 Hz oder schneller. Da sich das Fahrzeug einem Gegenstand mit einer Geschwindigkeit v nähert und sich fortlaufend der Abstand zwischen Fahrzeug und Gegenstand ändert, kann die Abstandsbestimmung und der anschließende Vergleich zwischen aktuellem und vorgegebenem Abstand zyklisch mit einer Wiederholrate (nicht kleiner als 10Hz) erfolgen, um den Zeitpunkt zum automatischen Abbremsen ausreichend genau bestimmen zu können.

Ist aber der aktuelle Abstand in Schritt 303 kleiner oder gleich dem vorgegebenen Abstand wird das Fahrzeug im Schritt 305 automatisch abgebremst. Da der Fahrer während einer Rückwärtsfahrt sowohl das Fahrpedal als auch das Bremspedal in unterschiedlicher Stärke betätigen kann, kann es erstrebenswert sein, die Auslösung der Bremsung der Notbremsassistenzfunktionalität unabhängig von der betätigten Pedalerie aber in Abhängigkeit von Abstand und Geschwindigkeit auszuführen. Das bedeutet, dass das automatische Abbremsen des Fahrzeugs einen vom Fahrer durch Betätigung der Pedalerie des Fahrzeugs definierten Fahrtwunsch übersteuern kann.

Da in unterschiedlichen Fahrzeugen unterschiedliche Bremsanlagen verbaut werden und die Fahrzeuge unterschiedliche Massen haben, kann die Ausführung parametrierbar gestaltet und die jeweiligen Werte für den Verzögerungsvorgang in Fahrversuchen ermittelt werden (Applikation).

Optional kann der Fahrer vor dem Bremsen in einem Schritt 304 gewarnt werden. Die Warnung kann in akustischer, optischer oder haptischer Weise z.B. durch eine Anzeige (Hervorhebung oder Markierung) in einem Kamerabild erfolgen.

Optional kann der Fahrer nach dem Bremsen in einem Schritt 306 über die Ursache des Bremsens informiert werden. Beide Optionen sind in FIG. 3 mit gestrichelten Kästen gekennzeichnet.

FIG. 4 zeigt ein Fahrzeug 400 mit einer Anhängerkupplung 401 und einer Kamera 403. Zu einem bestimmten Zeitpunkt befindet sich in einem aktuellen Abstand x von der Anhängerkupplung 401 die Anhängerdeichsel 402.

Das zuvor beschriebene Verfahren zur Kollisionsvermeidung ist nicht nur speziell bei Annäherung eines Fahrzeugs an eine Anhängerdeichsel verwendbar, sondern allgemein auch bei Annäherung eines Fahrzeugs an schwer erkennbare Gegenstände.

Obwohl die Erfindung in Bezug auf bestimmte bevorzugte Beispiele gezeigt und beschrieben wurde, werden Äquivalente und Modifikationen für andere Fachkräfte nach dem Lesen und Verstehen der Spezifikation auftreten. Die vorliegende Erfindung umfasst alle derartigen Äquivalente und Änderungen und ist nur durch den Umfang der beigefügten Ansprüche begrenzt.

### Bezugszeichenliste

- 100: Vorrichtung
- 101: Prozessor
- 102: Speicher
- 103: Schnittstelle
- 200: Software-Modul
- 201: erstes Teilmodul mit Anhängerankupplungsassistenzfunktionalität
- 202: zweites Teilmodul mit Notbremsassistenzfunktionalität
- 300: Verfahren
- 301: Empfangen von Daten
- 302: Analysieren von Daten
- 303: Abstandsüberprüfung
- 304: Warnen
- 305: Bremsen
- 306: Informieren
- 400: Fahrzeug
- 401: Anhängerkupplung
- 402: Anhängerdeichsel
- 403: Kamera

## Patentansprüche

1. Verfahren zum automatischen Abbremsen eines Fahrzeugs (400) bei Annäherung des Fahrzeugs (400) an eine Anhängerdeichsel (402) in einer Umgebung des Fahrzeugs, wobei Bilddaten einer Kamera (403) des Fahrzeugs (400) empfangen werden (301), die Bilddaten mittels eines Bildverarbeitungsalgorithmus analysiert werden (302) und **dadurch gekennzeichnet, dass** eine Notbremsassistenzfunktionalität des Fahrzeugs ausgelöst wird (305), wenn durch die Analyse der Bilddaten eine Anhängerdeichsel in einem vorgegebenen Abstand zur Anhängerkupplung des Fahrzeugs erkannt wird (303).

2. Verfahren nach Anspruch 1, wobei der vorgegebene Abstand der Anhängerdeichsel zur Anhängerkupplung des Fahrzeugs aus der Geschwindigkeit des Fahrzeugs und einem vorgegebenen Verzögerungswert berechnet wird.

3. Verfahren nach Anspruch 2, wobei die Berechnung des vorgegebenen Abstandes zyklisch mit einer Wiederholrate erfolgt, die optional nicht kleiner als 10 Hz ist.

4. Verfahren nach einem der voranstehenden Ansprüche, wobei die Notbremsassistenzfunktionalität des Fahrzeugs einen vom Fahrer durch Betätigung der Pedalerie des Fahrzeugs definierten Fahrtwunsch übersteuert.

5. Verfahren nach einem der voranstehenden Ansprüche, wobei dem Fahrer im Zusammenhang mit der Auslösung der Notbremsassistenzfunktionalität auch eine akustische, optische und/oder haptische Warnung übermittelt wird (304).

6. Verfahren nach einem der voranstehenden Ansprüche, wobei der Fahrer über den Grund der Auslösung der Notbremsassistenzfunktionalität informiert wird (306)

7. Vorrichtung für ein Fahrzeug (400), umfassend einen Prozessor (101) und einen Speicher (102), wobei der Prozessor (101) eingerichtet ist, um Programmcode aus dem Speicher (102) zu laden und auszuführen, wobei das Ausführen des Programmcodes bewirkt, dass der Prozessor (101) Bilddaten von einer Kamera (403) empfängt und die Bilddaten mittels eines Bildverarbeitungsalgorithmus analysiert, **dadurch gekennzeichnet, dass** das Ausführen des Programmcodes ferner bewirkt, dass der Prozessor eine Notbremsassistenzfunktionalität des Fahrzeugs (400) auslöst, wenn durch die Analyse der Bilddaten eine Anhängerdeichsel in einem vorgegebenen Abstand zur Anhängerkupplung des Fahrzeugs erkannt wird (303).

8. Fahrzeug (400) umfassend die Vorrichtung nach Anspruch 7.

## Claims

1. Method for automatically braking a vehicle (400) when the vehicle (400) approaches a tow bar (402) in an area surrounding the vehicle, wherein image data of a camera (403) of the vehicle (400) is received (301), the image data is analysed by means of an image processing algorithm (302) and
**characterized in that**
an emergency braking assistance function of the vehicle is activated (305) if a trailer tow bar is detected at a predefined distance from the trailer coupling of the vehicle (303) from the analysis of the image data.

2. Method according to Claim 1, wherein the predefined distance from the trailer tow bar to the trailer coupling of the vehicle is calculated from the speed of the vehicle and a predefined deceleration value.

3. Method according to Claim 2, wherein the calculation of the predefined distance is carried out cyclically with a repetition rate which is optionally not less than 10 Hz.

4. Method according to any one of the previous claims, wherein the emergency braking assistance function of the vehicle overrides a driving intention defined by the driver by actuating the pedals of the vehicle.

5. Method according to any one of the previous claims, wherein in conjunction with the activation of the emergency braking assistance functionality an acoustic, visual and/or haptic warning is also transmitted (304) to the driver.

6. Method according to any one of the previous claims, wherein the driver is informed about the reason for the activation of the emergency braking assistance function (306).

7. Device for a vehicle (400), comprising a processor (101) and a memory (102), wherein the processor (101) is designed to load and execute program code from the memory (102), wherein the execution of the program code causes the processor (101) to receive image data from a camera (403) and analyse the image data by means of an image processing algorithm,
**characterized in that**
the execution of the program code also causes the processor to activate an emergency braking assistance function of the vehicle (400) if a trailer tow bar is detected (303) at a predefined distance from the trailer coupling of the vehicle from the analysis of the image data.

8. Vehicle (400) comprising the device according to Claim 7.

## Revendications

1. Procédé permettant de freiner automatiquement un véhicule (400) lorsque véhicule (400) s'approche d'un timon d'attelage (402) dans un environnement du véhicule, dans lequel des données d'image sont reçues (301) d'une caméra (403) du véhicule (400), les données d'image sont analysées (302) au moyen d'un algorithme de traitement d'image, et
**caractérisé en ce qu'**une fonction d'assistance au freinage d'urgence du véhicule est déclenchée (305) si l'analyse des données d'image permet de distinguer (303) un timon d'attelage à une distance prédéfinie par rapport à dispositif d'attelage de remorque du véhicule.

2. Procédé selon la revendication 1, dans lequel la distance prédéfinie du timon d'attelage par rapport au dispositif d'attelage de remorque du véhicule est calculée à partir de la vitesse du véhicule et d'une valeur de temporisation prédéfinie.

3. Procédé selon la revendication 2, dans lequel le calcul de la distance prédéfinie est effectué de manière cyclique avec une fréquence d'itération qui en option n'est pas inférieure à 10 Hz.

4. Procédé selon l'une quelconque des revendications précédentes, dans lequel la fonction d'assistance au freinage d'urgence du véhicule outrepasse un souhait de conduite défini par le conducteur par l'actionnement des pédales du véhicule.

5. Procédé selon l'une quelconque des revendications précédentes, dans lequel un avertissement acoustique, optique et/ou haptique est également transmis (304) au conducteur en relation avec le déclenchement de la fonction d'assistance au freinage d'urgence.

6. Procédé selon l'une quelconque des revendications précédentes, dans lequel le conducteur est informé (306) du motif du déclenchement de la fonction d'assistance au freinage d'urgence.

7. Dispositif pour un véhicule (400), comprenant un processeur (101) et une mémoire (102), dans lequel le processeur (101) est conçu pour charger et exécuter du code programme à partir de la mémoire (102), dans lequel l'exécution du code programme fait que le processeur (101) reçoit des données d'image d'une caméra (403) et analyse les données d'image au moyen d'un algorithme de traitement d'image,
**caractérisé en ce que** l'exécution du code programme fait en outre que le processeur déclenche une fonction d'assistance au freinage d'urgence du véhicule (400) si l'analyse des données d'image permet de distinguer (303) un timon d'attelage à une distance prédéfinie par rapport au dispositif d'attelage de remorque du véhicule.

8. Véhicule (400), comprenant le dispositif selon la revendication 7.
